# EUROPEAN PATENT APPLICATION

(11) **EP 3 632 613 A1**
(43) Date of publication of application: **08.04.2020**
(21) Application number: 18805458.9
(22) Date of filing: 23.05.2018
(51) Int. Cl.: B24B 1/04, B06B 1/02, B23K 1/00, B26F 3/00

(54) **SHOWER HEAD PROCESSING TOOL, AND METHOD FOR MANUFACTURING SHOWER HEAD PROCESSING TOOL**

(30) Priority: 25.05.2017 JP 2017103890
(71) Applicant: Ferrotec Holdings Corporation, Tokyo 103-0027 (JP)
(72) Inventor: TAKASAKI Mitsuya, Tamano Okayama 706-8651 (JP)
(74) Representative: Barker Brettell LLP
(86) International application number: PCT/JP2018/019800
(87) International publication number: WO 2018/216719

(57) **Abstract**

A shower head processing tool configured to prevent a pin from falling due to a ultrasonic vibration is provided. A horn (10) includes a base (12), and a pin (14) configured to be inserted and fitted to a hole (12a) formed on one main surface of the base (12); and a horn (10) is configured to perform perforation processing in response to a vibration from a ultrasonic vibration generating device configured to generate a ultrasonic vibration. The pin (14) is fixed to the base (12) via a solder (16). A gap configured to allow the solder (16) to flow therein is provided between the hole (12a) and the pin (14). The solder (16) is applied on the one main surface and around the pin (14) which protrudes from the one main surface.

## Description

### TECHNICAL FIELD

The present disclosure relates to tools used in processing a shower head that is used in plasma processing, manufacturing of such tools, and a maintenance technique of such tools.

### BACKGROUND ART

In a field of semiconductor manufacturing, a jig with micro pores, called a shower head, is used in plasma processing of silicon substrate or the like. This jig is made of hard and brittle materials such as ceramics, silicon, and SiC. The jig is perforated with a processing tool having pins; the tool is called a horn. As disclosed in Patent Document 1, the perforation process is carried out by giving ultrasonic micro vibration to the processing tool while having the processing tool abutted to the shower head materials, and supplying abrasive grains onto the abutting surface of the shower head material.

The processing tool used as mentioned above requires maintenance when appropriate since the pins are unevenly consumed to leave uneven length as the use of the processing tool. Maintenance methods include pinpoint polish and pin replacement. Regarding the pinpoint polish, a method of polishing the pinpoints while having the tool to stay mounted on a processing device is suggested, as disclosed in Patent Document 2, for a purpose of reducing time and effort for mounting the tool on the processing device.

### PRIOR ART DOCUMENTS

### PATENT DOCUMENTS

Patent Document 1: Japanese Patent No. 5296730
Patent Document 2: Japanese Unexamined Patent Application Publication No. 2011-194546

### SUMMARY OF THE INVENTION

### PROBLEMS TO BE SOLVED BY THE INVENTION

As mentioned above, various methods have been suggested and preferred methods have been established with respect to processing of the shower head and maintenance of the processing tool. Meanwhile, with respect to the processing tool (horn) per se, a problem remains in that the pins fall out of a base due to ultrasonic vibration at the time of processing. This problem is caused due to the horn's structure of having the pins fixed in the micro pores formed on the base. Such fallings of the pins at the time of processing largely effect processing accuracy and product quality, such as differences in progress of perforation processing due to poor transmission of vibration and associated deformation of the pores, and causes a significant decrease in yield rate.

The object of the present disclosure is to provide a shower head processing tool capable of preventing the pins from falling due to ultrasonic vibration, and a manufacturing method of such a shower head processing tool.

### MEANS FOR SOLVING THE PROBLEMS

A shower head processing tool for achieving the aforementioned object according to the present disclosure comprises a base and an abutting member configured to be inserted and fitted to a recessed portion formed on one main surface of the base, and is configured to perform perforation processing in response to a vibration from a ultrasonic vibration generating device configured to generate a ultrasonic vibration. The abutting member is fixed to the base via a solder. A gap configured to allow the solder to flow therein is provided between the recessed portion and the abutting member. The solder is applied on the one main surface and around the abutting member which protrudes from the one main surface.

Preferably, in the shower head processing tool having the aforementioned characteristics, a contact angle between the abutting member protruding from the one main surface and the solder is in a range of acute angles. Due to having such a characteristic, a force that draws the abutting member towards the recessed portion acts on the abutting member before the solder is hardened. Accordingly, a fall prevention effect on the abutting member can be improved.

Also in the shower head processing tool having the aforementioned characteristics, the abutting member may be a pin, and the recessed portion may be a circular hole.

A manufacturing method of a shower head processing tool for achieving the aforementioned object according to the present disclosure is a method of manufacturing a shower head processing tool comprising a base and an abutting member configured to be inserted and fitted to a recessed portion formed on one main surface of the base, and being configured to perform perforation processing in response to a vibration from a ultrasonic vibration generating device configured to generate the ultrasonic vibration. The method comprises a step of forming the recessed portion on the one main surface such that a gap between the recessed portion and the abutting member, which is created when the abutting member is inserted and fitted to the recessed portion, provides a clearance sized to allow a solder to flow into the gap; a step of inserting and fitting the abutting member to the recessed portion; and a step of applying the solder to the one main surface and the gap.

Preferably, in the manufacturing method of the shower head processing tool having the aforementioned characteristics, a step of applying a flux to the surfaces contacting the solder before the step of applying the solder. Taking such a step improves a wetting property of the solder and thus allowing the solder to form a mountain-like adherent portion with respect to the abutting member. Accordingly, the fall prevention effect on the abutting member can be improved.

### EFFECTS OF THE INVENTION

The shower head processing tool and the manufacturing method of the shower head processing tool having the aforementioned characteristics can prevent the abutting member (pin) from falling due to the ultrasonic vibration.

### BRIEF DESCRIPTION OF THE DRAWINGS

FIG. 1 is a diagram showing a cross-sectional configuration of a shower head processing tool according to an embodiment.
FIG. 2 is an enlarged diagram showing part A in FIG. 1.
FIG. 3 is a partial enlarged diagram showing a modified example in which a modification is made on an inserted and fitted portion of a pin to prevent a falling by a wedge effect.

### MODE FOR CARRYING OUT THE INVENTION

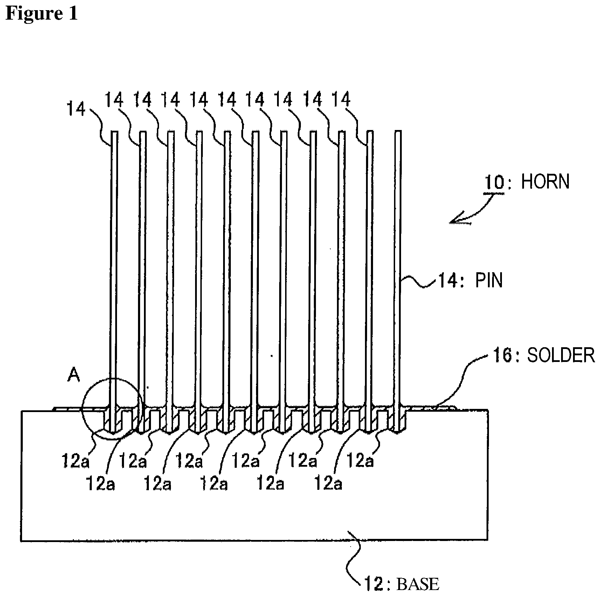

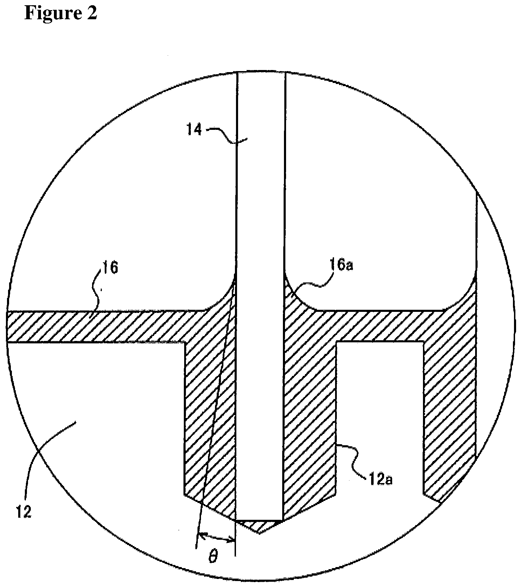

An embodiment of a shower head processing tool and a manufacturing method of the shower head processing tool according to the present disclosure will be described in detail with reference to the drawings. FIG. 1 is a diagram showing a cross-sectional configuration of the shower head processing tool according to the embodiment. FIG. 2 is an enlarged diagram showing part A in FIG. 1.

### [Configuration of Shower Head Processing Tool]

The shower head processing tool according to the present embodiment (hereinafter referred to as a horn 10) comprises a base 12 and pins 14 configured to stand on the base 12. The base 12 is a plate that is made of a metallic material with relatively high workability, such as iron, and is thick enough to avoid deflection. One main surface of the base 12 comprises holes 12a (recessed portions); each pin 14 stands in each hole 12a. The depth and diameter of the hole 12a depend on a diameter of the pin 14. Preferably, the depth of the hole 12a is nearly three to five times the diameter of the pin 14. Preferably, the diameter of the hole 12a is sized to provide a clearance, which is sized to allow a solder 16 to flow into a gap formed between an inner wall of the hole 12a and the pin 14 when the pin 14 is inserted and fitted to the hole.

A flow of the solder 16 into the gap is performed in different difficulty levels depending on the viscosity of the solder 16, which is ascribable to the melting temperature of the solder 16, and the wetting property between materials to be soldered. The solder 16 cannot flow into the gap when the gap between the hole 12a and the pin 14 is narrower than a gap width that allows a solder 16 to flow into the gap. Thus, a gap that is sized to allow the solder 16 to flow therein needs to be provided between the hole 12a and the pin 14. As a specific example, the diameter of the hole 12a is about 4 mm when the diameter of the pin 14 is 1 mm. Such relationship between the hole 12a and the pin 14 enables the solder 16 to flow into the gap between the hole 12a and the pin 14, and thereby strengthen the fixation of the pin 14.

As shown in FIG. 2, the present embodiment is also configured to apply the solder 16 on the one main surface of the base 12 like a coating layer so as to form a mountain-like adherent portion 16a of the solder 16 around the pin 14; the pin 14 protrudes from the one main surface. Here, the wetting property of the solder 16 with respect to the pin 14 is adjusted so that an angle θ, made by the pin 14 and the solder 16 in the mountain-like adherent portion 16a is an acute angle. The wetting property can be adjusted by applying a flux (not shown) to a surface of the pin 14 contacting the solder 16. The wetting property can also be adjusted by varying the ingredients of the flux.

In a state where the angle θ is an acute angle, a force to pull the pin 14, which is a contacting object, in a direction indicated with Arrow B is generated. This exerts a significant effect on preventing the pin 14 from falling. In a case where the θ is an obtuse angle greater than a right angle, a force acts in a direction of pulling the pin 14.

The pin 14 inserted and fitted to the holes 12a may be made of a hard metallic member such as stainless steel. The length of the pin 14 is not limited to a particular length, but is a length that allows the pin 14 to be used multiple times by polishing its end surface and also prevents the pin 14 from being warped when in use. More specifically, the length of the pin is nearly fifty to sixty times the diameter of the pin 14.

As the horn 10 is configured as mentioned above, the pins 14 standing on the base 12 are provided with adequate area for bonding with the solder 16 both inside and outside of the holes 12a. Accordingly, fallings of the pins 14 due to the ultrasonic vibration can be prevented.

### <Example Application>

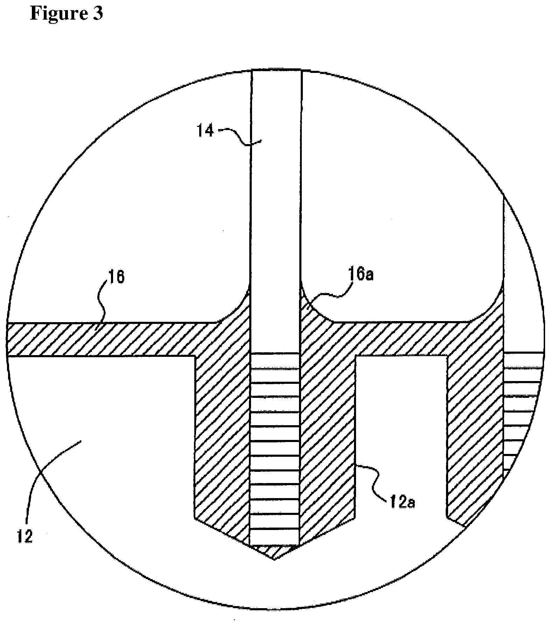

In the aforementioned embodiment, the pins 14 standing on the base 12 are described to be straight pins. Nevertheless, portions of the pins 14 inserted and fitted to the holes 12a (embedded portions) may be provided with slits (cuts) or knurls as shown in FIG. 3. Such damages on surfaces of the pins 14 contacting the solder 16 create a wedge effect which then improves the fall prevention effect on the pins 14.

### <Manufacturing Method>

A manufacturing method of the horn 10 configured as mentioned above will be explained next.

First, the hole 12a, where the pin 14 is inserted and fitted, is formed on the one main surface of a plate forming the base 12. Two or more holes 12a are formed on one surface of the base 12. The diameter of the hole 12a depends on the diameter of the pin 14 inserted and fitted to the hole 12a, and is sized to provide a clearance, which is sized to allow the solder 16 to flow into the gap formed between the hole 12a and the pin 14. As an example, the diameter of the hole 12a may be about 4 mm when the diameter of the pin 14 is 1 mm.

After the holes 12a are formed on the base 12, the pin 14 is inserted and fitted to each hole 12a and is fixed by the solder 16 poured on the one main surface. Here, the pin 14 is inserted and fitted by using a guide not shown in the drawings so as to hold the pin 14 arranged in the hole 12a, which is adequately larger than the diameter of the pin 14, without tilting. Then, the solder 16 is poured as the pin 14 is held in a standing state with the support of the guide to fix the pin 14. Taking these steps can help prevent the fixed pin 14 from tilting.

The manufacturing method in the present disclosure includes maintenance of the pins 14, such as replacement of the pins 14. The maintenance may be performed by removing the pins 14 by heating and melting the solder 16, and then repeating the step for inserting and fitting the pins and the steps thereafter.

The horn 10 manufactured by the aforementioned method can prevent the pin 14 from falling due to the ultrasonic vibration.

In the aforementioned embodiment, the recessed portion formed on the base 12 is described to be the circular hole 12a, and the abutting member inserted and fitted to the recessed portion is described to be the pin 14. Nevertheless, the shape of the horn 10 depends on the shape of the pores formed in the shower head, which is the object to be processed. Thus, if the shape of the pore is elongated, band-like, and the like, then the shape of the abutting member is determined accordingly. The shape of the recessed portion, where the abutting member is inserted and fitted, is determined in accordance with the shape of the abutting member; and the gap between the recessed portion and the abutting member is sized to provide a clearance that is sized to allow the solder 16 to flow into the gap.

### EXPLANATION OF REFERENCE NUMERALS

10...horn, 12...base, 12a...hole, 14...pin, 16...solder, 16a...mountain-like adherent portion

## Claims

1. A shower head processing tool comprising a base, and an abutting member configured to be inserted and fitted to a recessed portion formed on one main surface of the base, wherein the shower head processing tool is configured to perform perforation processing in response to a vibration from a ultrasonic vibration generating device configured to generate a ultrasonic vibration,
wherein the abutting member is fixed to the base via a solder,
wherein a gap configured to allow the solder to flow therein is provided between the recessed portion and the abutting member, and
wherein the solder is applied on the one main surface and around the abutting member which protrudes from the one main surface.

2. The shower head processing tool according to claim 1, wherein a contact angle between the abutting member protruding from the one main surface and the solder is in a range of acute angles.

3. The shower head processing tool according to claim 1 or 2, wherein the abutting member is a pin, and the recessed portion is a circular hole.

4. A manufacturing method of a shower head processing tool comprising a base, and an abutting member configured to be inserted and fitted to a recessed portion formed on one main surface of the base, wherein the shower head processing tool is configured to perform perforation processing in response to a vibration from a ultrasonic vibration generating device configured to generate a ultrasonic vibration, and the manufacturing method comprising:
a step of forming the recessed portion on the one main surface such that a gap between the recessed portion and the abutting member, which is created when the abutting member is inserted and fitted in the recessed portion, provides a clearance sized to allow a solder to flow into the gap;
a step of inserting and fitting the abutting member in the recessed portion; and
a step of applying the solder to the one main surface and the gap.

5. The manufacturing method of the shower head processing tool according to claim 4, further comprising a step of applying a flux to surfaces contacting the solder before the step of applying the solder.

## Amended claims

### Amended claims under Art. 19.1 PCT

1. A shower head processing tool comprising a base, and abutting members configured to be respectively inserted and fitted to recessed portions formed on one main surface of the base, wherein the shower head processing tool is configured to perform perforation processing in response to a vibration from a ultrasonic vibration generating device configured to generate the ultrasonic vibration,
wherein openings of the recessed portions are formed wider than a space between neighboring pairs of the recessed portions,
wherein the abutting members is-are fixed to the base via a solder,
wherein a gap configured to allow the solder to flow therein is provided between the-each of the recessed portions and respective one of the abutting members,
wherein the solder is applied on the one main surface and around the abutting members which protrudes- from the one main surface, and
wherein the solder applied on the one main surface is formed like a coating layer covering around the abutting members, which are arranged neighboring to each other.

2. The shower head processing tool according to claim 1, wherein a contact angle between each of the abutting members protruding from the one main surface and the solder is in a range of acute angles.

3. The shower head processing tool according to claim 1 or 2, wherein the abutting members are pins, and the recessed portions are circular holes.

4. A manufacturing method of a shower head processing tool comprising a base, and abutting members configured to be respectively inserted and fitted to a recessed portions formed on one main surface of the base, wherein the shower head processing tool is configured to perform perforation processing in response to a vibration from a ultrasonic vibration generating device configured to generate the ultrasonic vibration, and the manufacturing method comprising:
a step of forming the recessed portions on the one main surface such that a gap between one of the recessed portions and respective one of the abutting members, which is created when the one of the abutting members is inserted and fitted in respective one of the recessed portions, provides a clearance sized to allow a solder to flow into the gap, and such that openings of the recessed portions are formed wider than a space between neighboring pairs of the recessed portions;
a step of respectively inserting and fitting the abutting members in the recessed portions; and
a step of applying the solder to the one main surface like a coating layer and pouring the solder into the gap.

5. The manufacturing method of the shower head processing tool according to claim 4, further comprising a step of applying a flux to surfaces contacting the solder before the step of applying the solder.
